# EUROPÄISCHE PATENTSCHRIFT

(11) **EP 1 469 587 B1**
(45) Veröffentlichungstag und Bekanntmachung des Hinweises auf die Patenterteilung: **07.06.2006**
(21) Anmeldenummer: 04002283.2
(22) Anmeldetag: 03.02.2004
(51) Int. Cl.: H02P 6/20, H02P 6/24, F02N 11/08, H02P 3/18

(54) **Vorrichtung zur Verbesserung des Start-Stopp-Betriebes eines Fahrzeugs**
Apparatus for improving a vehicle start-stop operation
Appareil pour améliorer le fonctionnement d'arrêt et de redémarrage d' un véhicule

(30) Priorität: 14.04.2003 DE 10317094
(43) Veröffentlichungstag der Anmeldung: 20.10.2004
(73) Patentinhaber: ROBERT BOSCH GMBH, 70442 Stuttgart (DE)
(72) Erfinder: Ahner, Peter, 71032 Boeblingen (DE); Ackermann, Manfred, 71570 Oppenweiler (DE)

(56) Entgegenhaltungen:
- EP-A- 1 333 174
- FR-A- 2 729 435
- US-A- 4 630 577
- PATENT ABSTRACTS OF JAPAN vol. 010, no. 379 (E-465), 18. Dezember 1986 (1986-12-18) & JP 61 170288 A (HITACHI LTD), 31. Juli 1986 (1986-07-31)

## Beschreibung

Die Erfindung betrifft eine Vorrichtung zur Verbesserung des Start-Stopp-Betriebes eines Fahrzeugs.

### Stand der Technik

Zum Zwecke einer Verringerung des Kraftstoffverbrauchs, einer Verbesserung der elektrischen Bordnetzleistung und einer Verbesserung des Start-Stopp-Betriebes eines Fahrzeugs wurden in den letzten Jahren Systeme entwickelt, die einen integrierten Startergenerator auf der Kurbelwelle aufweisen, sowie Systeme, die anstelle eines üblichen Startergenerators einen riemenbetriebenen Startergenerator aufweisen. Bei diesen bekannten Systemen liegt beim Startbetrieb im Start-Stopp-Betriebsfall insbesondere dann, wenn die vorhandene Bordnetzspannung 12 V beträgt, im Vergleich zu einem konventionellen Startsystem ein verhältnismäßig kleines Trägheitsmoment an der Kurbelwelle vor. Ferner ergibt sich bei einer stromminimierten Auslegung des riemenbetriebenen Startergenerators oder des integrierten Startergenerators im Vergleich zu einem konventionellen Startsystem ausgehend von der Drehzahl Null ein vergleichsweise kleines maximales Startmoment.

Diese Effekte führen zu einer starken Abhängigkeit der Starteigenschaften von der Auspendelposition des Verbrennungsmotors. Am Anfang einer Startphase ist für einen ersten Zeit- und Drehwinkelbereich der Startmomentbedarf deutlich höher als in der anschließenden Durchdrehphase. Bei Verwendung einer Klauenpolmaschine als Generator wird die elektrische Erregung über Schleifringe zugeführt. Bei üblicher Dimensionierung der Erregerwicklung ergibt sich eine vergleichsweise große elektrische Zeitkonstante, die im Bereich von 100 ms liegt. Bei Vorliegen einer heißen Erregerwicklung, beispielsweise bei Temperaturen im Bereich von 180°C, ist sowohl die Zeitkonstante als auch der deutlich verringerte stationäre Wert des Erregerstroms ein Problem für die Startdynamik in einem Start-Stopp-Betrieb des jeweiligen Fahrzeugs.

Bezüglich dieses Start-Stopp-Betriebes gibt es Forderungen der Fahrzeughersteller, gemäß welcher bei einem sogenannten Ampelstart die Zeit, bis das Fahrzeug in Vortrieb geht, im Bereich von 300 bis 500 ms liegen soll. Ein Erfüllen dieser Forderungen mit den bekannten Systemen ist insbesondere bei einer knappen Momentenauslegung wegen des langsamen Momentenaufbaus mittels des Erregerstromes, insbesondere bei hoher Generatortemperatur, problematisch.

Aus der EP 0 825 700 A1 ist ein Spannungsversorgungssystem mit erhöhter Ausgangsleistung bekannt. Bei diesem bekannten System wird bei einer Zuschaltung eines starken Verbrauchers die an der Erregerwicklung liegende Spannung kurzzeitig gegenüber der Bordnetzspannung erhöht. Diese Spannungserhöhung wird entweder mittels zusätzlicher Wicklungen und Hilfsdioden im Generator oder mit Hilfe eines Spannungswandlers erhalten.

Aus der DE 197 21 386 A1 ist eine Startvorrichtung zum Starten einer Brennkraftmaschine bekannt. Diese bekannte Startvorrichtung weist einen Startermotor auf, der über ein Starterrelais mit einer Spannungsquelle verbindbar und mit der Brennkraftmaschine zum Andrehen in Eingriff bringbar ist. Die Ansteuerung des Starterrelais und/oder des Startermotors erfolgt über ein elektronisches Steuergerät. Dieses steuert dem Starterrelais und/oder dem Startermotor zugeordnete Halbleiter-Leistungsendstufen derart an, dass zumindest in einem Start-Stopp-Betrieb das Starterrelais im Stopp-Zustand der Brennkraftmaschine seine Einspurstellung aufweist, d. h. den Ritzel des Startermotors in den Zahnkranz der Brennkraftmaschine einspurt. Dadurch wird neben einer Zeiteinsparung beim Starten in der Start-Stopp-Betriebsart ein sauberes, verschleißfreies Einspuren erreicht.

### Vorteile der Erfindung

Eine Vorrichtung mit den Merkmalen des Anspruchs 1 weist gegenüber dem Stand der Technik den Vorteil auf, dass die geforderte Startdynamik ohne eine Vergrößerung der elektrischen Maschine und/oder der Phasenströme im Generator erreicht wird. Erreicht wird dieser Vorteil erfindungsgemäß durch eine von der Stoppzeit abhängige Vorerregung in der Stopp-Phase des Start-Stopp-Betriebes. Bereits ein kleiner Vorerregerstrom in der Stopp-Phase, beispielsweise 30 % vom Maximalwert des Erregerstromes bei 20°C, führt zu einer starken Erhöhung der Startdynamik. Bei einem hohen Prozentsatz aller Startvorgänge wird ein nahezu verzögerungsfreies Anfangsstartmoment von 90 % erzielt.

Ist die Vorerregung an die Häufigkeitsverteilung der Stoppzeiten angepasst, dann wird der Vorteil erzielt, dass die durch die Vorerregung erfolgende Entladung der Fahrzeugbatterie unterhalb eines vorgegebenen Grenzwertes bleibt, beispielsweise unterhalb von 3 ‰ der Nennkapazität der Fahrzeugbatterie.

Um eine noch bessere Anpassung der Vorerregung an den Batterieladezustand zu erreichen, wird gemäß einer Weiterbildung der Erfindung der Vorerregerstrom in Abhängigkeit vom Batterieladezustand eingestellt.

Weitere vorteilhafte Eigenschaften der Erfindung ergeben sich aus deren beispielhafter Erläuterung anhand der Zeichnung.

### Zeichnung

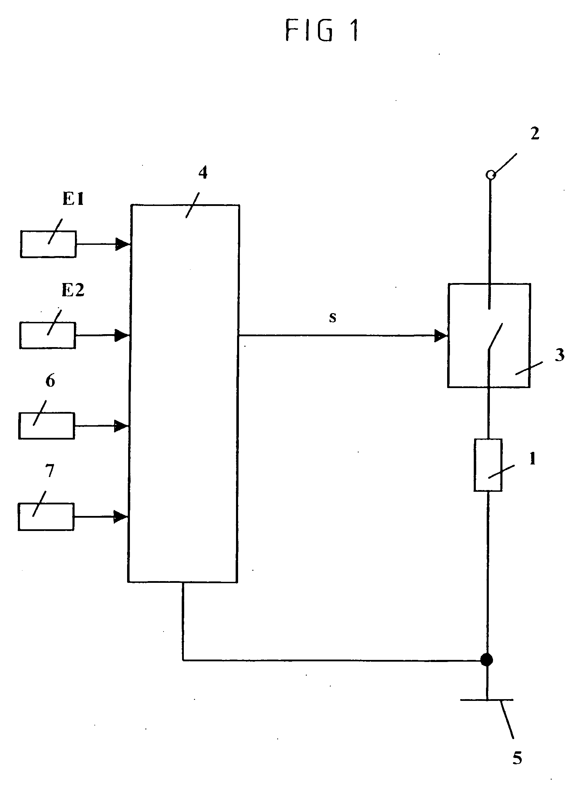

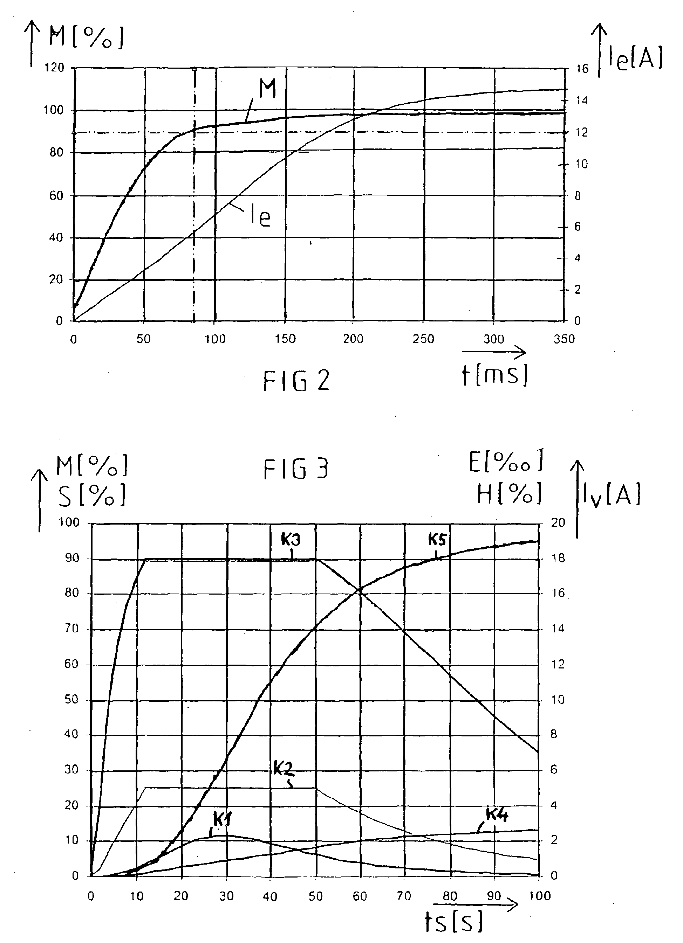

Die Figur 1 zeigt ein Schaltbild eines Ausführungsbeispiels für eine Vorrichtung gemäß der Erfindung. Die Figuren 2 und 3 zeigen Diagramme zur Veranschaulichung der Funktionsweise der Erfindung.

### Beschreibung

Die Figur 1 zeigt ein Schaltbild eines Ausführungsbeispiels für eine Vorrichtung gemäß der Erfindung. Die dargestellte Vorrichtung, mittels welcher ein im Vergleich zum Stand der Technik verbesserter Start-Stopp-Betrieb eines Fahrzeugs erreicht wird, weist eine dem Startergenerator des Fahrzeugs zugeordnete Erregerwicklung 1 auf. Diese ist über einen Schalter 3 mit einem Bordnetzspannungsanschluss 2 verbunden, wobei am Bordnetz eine Bordnetzspannung von 12 V anliegt.

Der Schalter 3, bei dem es sich um einen elektronischen Schalter handelt, wird von Steuersignalen s beaufschlagt, die von einer Steuereinheit 4 zur Verfügung gestellt werden. Der vom Schalter 3 abgelegene Anschluss der Erregerwicklung 1 ist mit Masse 5 verbunden.

Die Steuereinheit 4 ist mit einem Eingangsanschluss E1 verbunden, über welchen ihr ein von einem Sensor abgeleitetes Signal zugeführt wird, wenn der Fahrer des Fahrzeugs am Ende einer Stopp-Phase im Start-Stopp-Betrieb zum Beispiel das Gaspedal betätigt, um loszufahren. Weiterhin ist die Steuereinheit 4 mit einem Eingangsanschluss E2 verbunden, über welchen ihr ein von einem weiteren Sensor abgeleitetes Signal zugeführt wird, wenn das Fahrzeug zum Beispiel durch eine Betätigung der Bremse bis zum Stillstand kommt, beispielsweise bei einem Ampelstopp. Ferner ist die Steuereinheit 4 mit einem Batteriezustandssensor 6 verbunden, dessen Ausgangssignale der Steuereinheit 4 Informationen über den Ladezustand der Fahrzeugbatterie übermitteln.

Schließlich erhält die Steuereinheit 4 auch Informationen aus einem Speicher 7. Bei diesem handelt es sich um einen Nur - Lesespeicher, in welchem in Form eines Histogrammes Stoppzeiten hinterlegt sind, wie noch unten im Zusammenhang mit der Figur 3 erläutert wird. Die Steuereinheit hat weiterhin auch eine Verbindung mit Masse 5.

Die Steuereinheit 4 beeinflusst durch die von ihr generierten Steuersignals s, welche den Schaltzustand des Schalters 3 bestimmen, den durch die Erregerwicklung 1 fließenden Erregerstrom.

Bei herkömmlichen Start-Stopp-Systemen ist der Schalter 3 in den Stopp-Phasen des Start-Stopp-Betriebes geöffnet, so dass das Bordnetz von der Erregerwicklung 1 getrennt ist. Wird bei herkömmlichen Start-Stopp-Systemen am Ende einer Stopp-Phase das Gaspedal betätigt, dann wird der Schalter 3 geschlossen, um die Erregerwicklung 1 wieder mit einem Erregerstrom zu versorgen, damit der Startergenerator des Fahrzeugs die zum Start benötigte Energie bereitstellen kann.

Im Unterschied zu diesen herkömmlichen Start-Stopp-Systemen wird gemäß der vorliegenden Erfindung die Erregerwicklung 1 in den Stopp-Phasen des Start-Stopp-Betriebes mit einem Vorerregerstrom versorgt. Zu diesem Zweck stellt die Steuereinheit 4 Steuersignale s zur Verfügung, die in den genannten Stopp-Phasen den Schalter 3 durchlässig schalten, um die Erregerwicklung mit dem Vorerregerstrom zu beaufschlagen.

Die Steuereinheit 4 generiert die Steuersignale s in Abhängigkeit von den ihr zugeführten Eingangssignalen, die von den Eingangsanschlüssen E1 und E2, dem Batteriezustandssensor 6 und aus dem Speicher 7 abgeleitet sind.

Durch diese Vorerregung während der Stopp-Phasen des Start-Stopp-Betriebes wird erreicht, dass beim nachfolgenden Start des Fahrzeugs die geforderte hohe Startdynamik erzielt wird, ohne dass im Vergleich zum Stand der Technik die elektrische Maschine und/oder die Phasenströme vergrößert werden müssen. Bereits ein kleiner Vorerregerstrom, beispielsweise 30 % des Maximalwertes des stationären Erregerstroms bei 20°C, führt zu einer starken Erhöhung der Startdynamik. In der Mehrheit aller Fahrzeugstarts im Start-Stopp-Betrieb wird ein nahezu verzögerungsfreies Anfangs-Startmoment von ca. 90 % erzielt. Andere Maßnahmen zur Erhöhung des Anfangs-Startmoments, beispielsweise eine Spannungserhöhung beim Start, sind aufwendiger und arbeiten nicht völlig verzögerungsfrei.

Durch eine unter Verwendung der im Speicher 7 abgelegten Daten durchgeführte Anpassung der Vorerregung an die Häufigkeitsverteilung der Stoppzeiten kann sichergestellt werden, dass durch die Vorerregung die Nennkapazität der Fahrzeugbatterie um weniger als ein vorgegebener Schwellenwert unterschritten wird. Beispielsweise kann vorgegeben werden, dass die durch die Vorerregung bewirkte Batterieentladung nicht mehr als 3 ‰ der Nennkapazität der Batterie betragen darf. Eine weitere Verbesserung der Anpassung wird durch die Einstellung der Vorerregung in Abhängigkeit vom Batterieladezustand erreicht. Dies wird durch die Berücksichtigung der Ausgangssignale des Batteriezustandssensors ermöglicht.

Nachfolgend wird die Funktionsweise einer Vorrichtung gemäß der Erfindung anhand der Figuren 2 und 3 veranschaulicht.

Bei guter Maschinenausnutzung im Startbetrieb muss die elektrische Maschine, bei der es sich beispielsweise um eine Klauenpolmaschine mit elektrischer Erregung handelt, mit hoher Läufersättigung betrieben werden. In der Figur 2 ist ein Beispiel für den Verlauf des Erregerstroms Iₑ und des relativen Antriebsmoments M unmittelbar nach dem Einschalten der Erregerspannung bei +20°C gezeigt. Aus der Darstellung ist die hohe Sättigung der Maschine ersichtlich. Aus dem Verlauf des Erregerstroms Iₑ ergibt sich, dass das stationäre Antriebsmoment (100 %) bei einem Erregerstrom von etwa 15 A erreicht wird. Weiterhin geht aus der Figur 2 hervor, dass bei einem Erregerstrom Iₑ von ungefähr 5 A bereits ein relatives Antriebsmoment M von fast 90 % erreicht wird. Die horizontale gestrichelte Linie in der Figur 2 veranschaulicht dabei das relative Antriebsmoment von 90 %. Aus dem Verlauf der vertikalen gestrichelten Linie bzw. der Lage der Schnittpunkte der vertikalen gestrichelten Linie mit der Kurve für den Erregerstrom Iₑ und der Kurve für das relative Antriebsmoment M sowie mit der Abszisse lässt sich ersehen, dass das genannte relative Antriebsmoment von 90 % bereits nach einer Zeit von etwa 80 ms vorliegt.

Dies bedeutet, dass mit einem relativ kleinen Erregerstrom bereits ein hohes Startmoment und damit im Vergleich zu bekannten Start-Stopp-Systemen eine erhebliche Verbesserung der Start-Dynamik erreicht wird. Da der Vorerregerstrom nicht größer ist als der stationäre Erregerstrom, der im Normalbetrieb des Fahrzeugs vorliegt, stellt der Vorerregerstrom für die thermische Auslegung sowie für die Auslegung der Bürsten und der Schleifringe kein Problem dar.

Da durch die Bereitstellung des Vorerregerstroms der Fahrzeugbatterie Ladung entnommen wird, muss darauf geachtet werden, dass die Batterieladungsentnahme vorgegebene Grenzwerte nicht überschreitet. Diese Anforderungen bezüglich einer begrenzten Batterieladungsentnahme können dadurch erfüllt werden, dass der Vorerregerstrom über eine zugeordnete Kennlinie derart angepasst wird, dass im Mittelbereich der üblichen Ampel-Stoppzeiten ein hohes Startmoment erreicht und dabei eine maximale relative Batterieentladung nicht überschritten wird. Dies wird nachfolgend anhand der Figur 3 veranschaulicht.

In der Figur 3 sind Kurven K1 bis K5 dargestellt. Die Kurve K1 zeigt die Stopp-Zeitverteilung aufgetragen über der Ampel-Stoppzeit ts. Beispielsweise ergibt sich aus dem Kurvenverlauf von K1 mit der Klassenbreite 1 s, dass Ampel-Stoppzeiten im Bereich von 20 s bis 40 s mit einer relativen Häufigkeit von etwa 2 % auftreten, während Ampel-Stoppzeiten zwischen 40 s und 50 s mit einer relativen Häufigkeit im Bereich von 1,5 % bis 2 % und Ampel-Stoppzeiten zwischen 50 s und 70 s mit einer relativen Häufigkeit im Bereich von 0,5 % bis 1,5 % auftreten, usw..

Diese Ampel-Stoppzeiten-Verteilung ist in Form eines Histogrammes im Speicher 7 von Figur 1 hinterlegt und wird bei der Dimensionierung des Vorerregerstroms berücksichtigt.

Die Kurve K5 zeigt den Verlauf der Summenhäufigkeit S. Aus der zugehörigen Prozent-Skala, deren Zahlenwerte auf der linken Seite des Diagrammes gemäß Figur 3 angegeben sind, geht beispielsweise hervor, dass nach 50 s Ampel-Stoppzeit bereits 70 % Summenhäufigkeit vorliegt und dass nur vergleichsweise wenige Ampel-Stopps weniger als 5 s bzw. länger als 100 s dauern.

Allgemein gilt, dass sehr kurze Ampel-Stopps und Ampel-Stopps, die lange dauern, selten sind, während Ampel-Stoppzeiten zwischen 20 s und 40 s am häufigsten zu erwarten sind.

Die Kurve K2 zeigt den Vorerregerstrom Iᵥ aufgetragen über der Ampel-Stoppzeit ts. Es ist aus dem Verlauf der Kurve K2 ersichtlich, dass hohen relativen Häufigkeiten H (siehe Kurve K1) Vorerregerströme Iᵥ mit einem hohen relativen Startmoment M (siehe Kurve K3) zugeordnet sind und dass niedrigen relativen Häufigkeiten H (siehe Kurve K1) Vorerregerströme Iᵥ mit einem kleinen relativen Startmoment M (siehe Kurve K3) zugeordnet sind. Dadurch wird erreicht, dass auch bei großen Stopp-Zeiten eine vorgegebene maximale Batterieentladung nicht überschritten wird.

Die in der Figur 3 angegebenen Zahlenwerte sind als Ausführungsbeispiele zu verstehen. Sie können in Abhängigkeit vom Ladezustand der Fahrzeugbatterie und vom aktuellen Bedarf weiterer elektrischer Verbraucher variieren.

Aus dem Verlauf der Kurve K3, die das relative Startmoment zeigt, ist ersichtlich, dass das relative Moment auf Grund der hohen Läufersättigung bereits bei kleinem Erregerstrom hohe Werte annimmt. Dies begünstigt das gewünschte Ziel, mit möglichst geringer Batterieentladung eine hohe Startdynamik zu erreichen. Im Bereich der Stoppzeiten ts zwischen 12 s und 50 s liegt durchgängig ein Startmoment von 90 % vor. Bei einer Stoppzeit von 80 s liegt noch ein Startmoment von 58 % vor.

Die Kurve K4 zeigt die relative Batterieentladung bezogen auf eine Batterie-Nennkapazität von 36 Ah. Beim dargestellten Ausführungsbeispiel wird bei einer angenommenen maximalen Ampel-Stoppzeit von 100 s die relative Batterieladungsentnahme nicht größer als 2,6 ‰.

Eine noch bessere Anpassung zwischen hoher Startdynamik und zulässiger Batterieladungsentnahme kann erreicht werden, wenn zusätzlich eine Batterie-Zustandsüberwachung durchgeführt wird. Die vom Batteriezustandssensor 6 abgeleiteten Signale werden von der Steuereinheit 4 bei der Generierung der Steuersignale s und damit zur Anpassung des Vorerregerstromes Iᵥ an den Batterieladezustand verwendet.

## Patentansprüche

1. Vorrichtung zur Verbesserung des Start-Stopp-Betriebes eines Fahrzeugs, welche eine dem Startergenerator des Fahrzeugs zugeordnete und an das Bordnetz des Fahrzeugs angeschlossene Erregerwicklung sowie eine Steuereinheit aufweist, durch deren Steuersignale der durch die Erregerwicklung fließende Erregerstrom beeinflusst wird, **dadurch gekennzeichnet, dass** die Steuereinheit (4) in der Stopp-Phase des Start-Stopp-Betriebes Steuersignale (s) bereitstellt, auf Grund welcher die Erregerwicklung (1) in der Stopp-Phase mit einem Vorerregerstrom (Iᵥ) beaufschlagt wird.

2. Vorrichtung nach Anspruch 1, **dadurch gekennzeichnet, dass** die Steuereinheit (4) die den Vorerregerstrom beeinflussenden Steuersignale (s) derart generiert, dass durch die Vorerregung die Nennkapazität der Fahrzeugbatterie um weniger als ein vorgegebener Schwellenwert unterschritten wird.

3. Vorrichtung nach Anspruch 1 oder 2, **dadurch gekennzeichnet, dass** die Steuereinheit (4) mit einem Batterieladezustandssensor (6) verbunden ist und die den Vorerregerstrom beeinflussenden Steuersignale (s) unter Berücksichtigung des Batterieladezustandes generiert.

4. Vorrichtung nach einem der vorhergehenden Ansprüche, **dadurch gekennzeichnet, dass** sie einen Speicher (7) aufweist, in welchem eine Stoppzeitenverteilung in Form eines Histogrammes hinterlegt ist, dass die Steuereinheit (4) mit dem Speicher (7) verbunden ist und dass die Steuereinheit (4) die den Erregerstrom beeinflussenden Steuersignale (s) unter Berücksichtigung der im Speicher (7) abgelegten Stoppzeitenverteilung generiert.

## Claims

1. Apparatus for improving the start/stop operation of a vehicle, which has a field winding which is associated with the starter generator of the vehicle and is connected to the on-board electrical system of the vehicle, and a control unit whose control signals influence the field current flowing through the field winding, **characterized in that** the control unit (4) provides control signals (s) in the stop phase of the start/stop operation, and a pre-excitation current (Iᵥ) is applied to the field winding (1) in the stop phase on the basis of the said control signals.

2. Apparatus according to Claim 1, **characterized in that** the control unit (4) generates the control signals (s), which influence the pre-excitation current, in such a way that the rated capacity of the vehicle battery is undershot by less than a prespecified threshold value on account of the pre-excitation.

3. Apparatus according to Claim 1 or 2, **characterized in that** the control unit (4) is connected to a battery charge state sensor (6) and generates the control signals (s), which influence the pre-excitation current, taking into account the battery charge state.

4. Apparatus according to one of the preceding claims, **characterized in that** it has a memory (7) which contains a stop time distribution in the form of a histogram, **in that** the control unit (4) is connected to the memory (7), and **in that** the control unit (4) generates the control signals (s), which influence the field current, taking into account the stop time distribution, which is stored in the memory (7).

## Revendications

1. Dispositif permettant d'améliorer le mode d'arrêt et de démarrage d'un véhicule, et présentant un bobinage d'excitation associé au générateur de démarrage du véhicule et raccordé au réseau de bord ainsi qu'une unité de commande dont les signaux de commande influencent le courant d'excitation passant à travers le bobinage d'excitation,
**caractérisé en ce que**
l'unité de commande (4) met à disposition, dans la phase d'arrêt du mode d'arrêt et de démarrage, des signaux de commande (s) sur la base desquels le bobinage d'excitation (1) est sollicité, dans la phase d'arrêt, par un courant d'excitation préalable (Iᵥ).

2. Dispositif selon la revendication 1,
**caractérisé en ce que**
l'unité de commande (4) génère les signaux de commande (s) qui influencent le courant d'excitation préalable de telle sorte que l'excitation préalable entraîne le dépassement de la capacité nominale de la batterie du véhicule de moins d'une valeur de seuil prédéterminée.

3. Dispositif selon la revendication 1 ou 2,
**caractérisé en ce que**
l'unité de commande (4) est reliée à un capteur de l'état de charge de la batterie (6) et les signaux de commande (s) qui influencent le courant d'excitation préalable sont générés en tenant compte de l'état de charge de la batterie.

4. Dispositif selon l'une des revendications précédentes,
**caractérisé en ce qu'**
il présente une mémoire (7) dans laquelle est stockée une répartition des temps d'arrêt sous la forme d'un histogramme,
l'unité de commande (4) est reliée à la mémoire (7), et
l'unité de commande (4) génère les signaux de commande (s) qui influencent le courant d'excitation en tenant compte de la répartition des temps d'arrêt stockée dans la mémoire (7).
